# EUROPÄISCHE PATENTANMELDUNG

(11) **EP 1 676 977 A1**
(43) Veröffentlichungstag der Anmeldung: **05.07.2006**
(21) Anmeldenummer: 04030991.6
(22) Anmeldetag: 29.12.2004
(51) Int. Cl.: F01D 5/08, F02C 7/18

(54) **Gasturbine mit einem Vordrallerzeuger sowie Verfahren zum Betreiben einer Gasturbine**

(71) Anmelder: SIEMENS AKTIENGESELLSCHAFT, 80333 München (DE)
(72) Erfinder: Amedick, Volker, 47198 Duisburg (DE); Baldauf, Stefan, Dr., 45481 Mülheim an der Ruhr (DE); Bolms, Hans-Thomas, Dr., 45481 Mülheim an der Ruhr (DE); Heselhaus, Andreas, Dr., 40233 Düsseldorf (DE); Lang, Gernot, 52499 Baesweiler (DE); Leuchs, Ulrich, Dr., 51789 Lindlar (DE); Münzer, Jan, 6500 AC Nijmegen (NL); Schneider, Oliver, 46487 Wesel (DE); Warnack, Dieter, Dr., 12049 Berlin (DE)

(57) **Zusammenfassung**

Eine Gasturbine (1) mit einer Anzahl von jeweils zur Leitschaufelreihen zusammengefassten Leitschaufeln (14) und mit einer Anzahl von jeweils zu Laufschaufelreihen zusammengefassten Laufschaufeln (12), wobei eine Anzahl von Leitschaufeln (14) zumindest einer Leitschaufelreihe jeweils einen oder mehrere integrierte Kühlluftkanäle (28) aufweist, die ausgangsseitig mit einem Vordrallerzeuger (24) verbunden sind, und wobei der Vordrallerzeuger (24) eine Anzahl von für eine Übergabe von abströmender Kühlluft in die Laufschaufeln (12) einer unmittelbar benachbarten Laufschaufelreihe ausgelegten Austrittskanälen (36) aufweist, soll bei gering gehaltenem Kühlluftbedarf für eine besonders zuverlässige Kühlung der Turbinenschaufeln, insbesondere der Laufschaufeln (12), ausgelegt sein. Dazu ist erfindungsgemäß in einem oder mehreren der Austrittskanäle (36) des Vordrallerzeugers (24) jeweils eine Einspritzdüse (48) für Flüssigkeit angeordnet, wodurch bei vergleichsweise geringem Aufwand eine wirkungsvolle Zwischenkühlung von Kühlluft (K) erreicht wird.

## Beschreibung

Die Erfindung bezieht sich auf eine Gasturbine mit einer Anzahl von jeweils zu Leitschaufelreihen zusammengefassten Leitschaufeln und mit einer Anzahl von jeweils zu Laufschaufelreihen zusammengefassten Laufschaufeln, wobei eine Anzahl von Leitschaufeln zumindest einer Leitschaufelreihe jeweils einen oder mehrere integrierte Kühlluftkanäle aufweist, die ausgangsseitig mit einem Vordrallerzeuger verbunden sind. Dabei weist der Vordrallerzeuger eine Anzahl von für eine Übergabe von abströmender Kühlluft in die Laufschaufeln einer unmittelbar benachbarten Laufschaufelreihe ausgelegten Austrittskanälen auf. Die Erfindung betrifft weiter einen Vordrallerzeuger einer Gasturbine und ein Verfahren zum Betreiben einer mit einem derartigen Vordrallerzeuger ausgestatteten Gasturbine.

Gasturbinen werden in vielen Bereichen zum Antrieb von Generatoren oder von Arbeitsmaschinen eingesetzt. Dabei wird der Energieinhalt eines Brennstoffs zur Erzeugung einer Rotationsbewegung einer auch als Rotorwelle bezeichneten Turbinenwelle genutzt. Der Brennstoff wird dazu in einer Brennkammer verbrannt, wobei von einem Luftverdichter verdichtete Luft zugeführt wird. Das in der Brennkammer durch die Verbrennung des Brennstoffs erzeugte, unter hohem Druck und unter hoher Temperatur stehende Arbeitsmedium wird dabei über eine der Brennkammer nachgeschaltete Turbineneinheit geführt, wo es sich arbeitsleistend entspannt.

Zur Erzeugung der Rotationsbewegung der Turbinenwelle sind dabei an dieser eine Anzahl von üblicherweise in Schaufelgruppen oder Schaufelreihen zusammengefassten Laufschaufeln angeordnet, die über einen Impulsübertrag aus dem Arbeitsmedium die Turbinenwelle antreiben. Zur Führung des Arbeitsmediums in der Turbineneinheit sind zudem üblicherweise zwischen benachbarten Laufschaufelreihen mit dem Turbinengehäuse verbundene Leitschaüfelreihen angeordnet.

Bei der Auslegung derartiger Gasturbinen ist zusätzlich zur erreichbaren Leistung üblicherweise ein besonders hoher Wirkungsgrad ein Auslegungsziel. Eine Erhöhung des Wirkungsgrades lässt sich dabei aus thermodynamischen Gründen grundsätzlich durch eine Erhöhung der Austrittstemperatur erreichen, mit dem das Arbeitsmedium aus der Brennkammer ab- und in die Turbineneinheit einströmt. Daher werden Temperaturen von etwa 1200 °C bis 1300 °C für derartige Gasturbinen angestrebt und auch erreicht.

Bei derartig hohen Temperaturen des Arbeitsmediums sind jedoch die diesem ausgesetzten Komponenten und Bauteile hohen thermischen Belastungen ausgesetzt. Um dennoch bei hoher Zuverlässigkeit eine vergleichsweise lange Lebensdauer der betroffenen Komponenten zu gewährleisten, ist üblicherweise eine Kühlung der betroffenen Komponenten, insbesondere von Lauf- und/oder Leitschaufeln der Turbineneinheit, vorgesehen. Die Turbinenschaufeln sind daher üblicherweise kühlbar ausgebildet, wobei insbesondere eine wirksame und zuverlässige Kühlung der in Strömungsrichtung des Arbeitsmediums gesehen ersten Schaufelreihen sichergestellt sein soll. Zur Kühlung weist die jeweilige Turbinenschaufel dabei üblicherweise einen in das Schaufelblatt oder das Schaufelprofil integrierten Kühlmittelkanal auf, von dem aus ein Kühlmittel, üblicherweise aus dem Verdichterluftstrom abgezweigte Kühlluft, gezielt insbesondere den thermisch belasteten Zonen der Turbinenschaufel zuleitbar ist.

Aus der EP 1 380 723 A1 ist eine Gasturbine bekannt, bei der die Leitschaufeln einer Leitschaufelreihe und die Laufschaufeln einer in Strömungsrichtung des Arbeitsmediums gesehen unmittelbar vor- oder nachgeordneten Laufschaufelreihe kühlmittelseitig in Reihe geschaltet sind, mithin eine Mehrfachverwendung von Kühlluft ermöglicht ist. Dazu ist ein in die jeweilige Leitschaufel integrierter Kühlluftkanal mit einem am kopfseitigen Ende der Leitschaufel angeordneten so genannten Drallerzeuger oder Vordrallerzeuger (Pre-Swirler) verbunden, dessen Austrittskanäle derart ausgerichtet sind, dass der aus den endseitigen Austrittsöffnungen abströmenden Kühlluft eine Geschwindigkeitskomponente tangential zur Drehrichtung der Rotorwelle oder Turbinenwelle aufgeprägt wird. Durch eine derartige Anpassung an den Rotordrall wird die Übergabe der Kühlluft aus dem räumlich feststehenden Leitschaufelsystem an die auf der rotierenden Rotorwelle angeordneten, den Laufschaufeln zugeordneten Eintrittsöffnungen erleichtert.

Zwar entfällt auf diese Weise eine den Gesamtwirkungsgrad der Gasturbine in besonderem Maße mindernde Versorgung der Laufschaufeln mit separat bereitgestellter, frischer Kühlluft, jedoch kann ein derartiges Kühlsystem auch Nachteile mit sich bringen. Einerseits findet während der Durchströmung der Leitschaufeln eine erhebliche Aufheizung der Kühlluft statt, so dass die weitere Verwendung dieser eigentlich bereits "verbrauchten" Kühlluft unter Umständen für eine ausreichende Kühlung der nachgeschalteten Laufschaufeln, insbesondere bei Volllastzuständen, nicht mehr ausreicht. Andererseits kann aufgrund des vergleichsweise langen Strömungsweges durch die Kühlmittelkanäle der jeweiligen Leit- und Laufschaufel und aufgrund von Leckageverlusten an der Übergabestelle zwischen dem stehenden und dem rotierenden Teilsystem ein unerwünschter Druckverlust auftreten. Dieser Druckverlust fällt insbesondere dann störend ins Gewicht, wenn die Kühlung der Laufschaufeln im Sinne eines offenen Kühlsystems ausgelegt ist, bei dem die Kühlluft nach dem Durchströmen der jeweiligen Laufschaufel aus an der Oberfläche des Schaufelblattes angeordneten Filmkühllöchern unter Ausbildung eines schützenden Kühlluftfilms abströmt, um sich anschließend mit dem heißen Arbeitsmedium zu vermischen. Ist nämlich aufgrund der erwähnten Verluste der Kühlluftdruck an der jeweiligen Austrittsstelle der Laufschaufel zu gering, so bildet sich der Kühlluftfilm nur unvollständig oder gar nicht aus. Möglicherweise kommt es sogar zum Eintreten von heißem Arbeitsmedium in das Kanalsystem der Laufschaufeln und somit zu einer erheblichen Materialbelastung.

Der Erfindung liegt daher die Aufgabe zugrunde, eine Gasturbine der oben genannten Art anzugeben, bei der bei gering gehaltenem Kühlluftbedarf eine besonders zuverlässige Kühlung der Turbinenschaufeln, insbesondere der kühlluftseitig den Leitschaufeln nachgeschalteten Laufschaufeln, ermöglicht ist. Weiterhin soll ein für einen insgesamt vergleichsweise geringen Kühlluftbedarf besonders geeignetes Verfahren zum Betreiben einer derartigen Gasturbine angegeben werden. Darüber hinaus soll ein Vordrallerzeuger angegeben werden, der für eine besonders effiziente Kühlung der Turbinenschaufeln ausgelegt ist.

Bezüglich der Gasturbine wird diese Aufgabe erfindungsgemäß dadurch gelöst, dass in einem oder mehreren der Austrittskanäle des Vordrallerzeugers jeweils eine Einspritzdüse für Flüssigkeit angeordnet ist.

Die Erfindung geht dabei von der Überlegung aus, dass für eine besonders zuverlässige Kühlung der Turbinenschaufeln Kühlluft mit ausreichend niedriger Temperatur bereitgestellt werden sollte, und zwar sowohl im Bereich der Leitschaufeln als auch im Bereich der kühlluftseitig nachgeschalteten Laufschaufeln. Da aber einerseits bereits beim Durchströmen der Leitschaufeln eine Erwärmung der Kühlluft und damit ein Verlust an Kühlvermögen stattfindet und andererseits eine diesen Effekt kompensierende Überversorgung der Leitschaufeln mit besonders kalter Kühlluft im Interesse eines hohen Wirkungsgrades und einer Vermeidung von Materialspannungen (aufgrund großer Temperaturgradienten innerhalb der Leitschaufelblätter) vermieden werden sollte, sollte im Verlauf des Strömungsweges eine Aufbereitung der erwärmten Kühlluft durch eine Zwischenkühlung erfolgen. Um dies auch im Hinblick auf bestehende Systeme mit besonders gering gehaltenem Aufwand zu ermöglichen, ist eine Eindüsung von Flüssigkeit in die Kühlluft unmittelbar vor ihrem Eintritt in die Schaufeln der Laufschaufelreihe mittels in den Austrittskanälen des Vordrallerzeugers angeordneten Einspritzdüsen vorgesehen, wobei die Verdampfung der Flüssigkeit eine Temperaturabsenkung und Erhöhung des Kühlpotenzials des entstehenden Mischstroms bewirkt.

Vorteilhafterweise umfasst der Vordrallerzeuger eine Anzahl von jeweils mit den kopfseitigen Enden einer Anzahl von Leitschaufeln verbundenen und ringabschnittsförmig um die Turbinenwelle herum angeordneten Umlenkungssegmenten, die jeweils eingangsseitig über die Kühlluftkanäle der zugeordneten Leitschaufeln mit Kühlluft beaufschlagbar sind. Insbesondere kann der ringförmige Vordrallerzeuger aus zwei halbringförmigen, ihrerseits gegebenenfalls modular ausgeführten Umlenkungssegmenten zusammengesetzt oder auch einteilig ausgeführt sein. Dadurch ist die Montage und Zentrierung des Vordrallerzeugers um die Turbinenwelle erleichtert.

Gemäß einer Weiterbildung ist einer Anzahl der im jeweiligen Umlenkungselement angeordneten Austrittskanäle ein gemeinsamer Verteilerkanal kühlluftseitig vorgeschaltet. Im Verteilerkanal kann ein Druckausgleich erfolgen, so dass eine bezogen auf den Umfang des Ringes oder Ringabschnitts gleichmäßige Verteilung der Kühlluft auf die Austrittskanäle mit den darin angeordneten Einspritzdüsen gewährleistet ist.

Die Eintrittsöffnungen für die in die Laufschaufeln integrierten Kühlmittelkanäle sind vorzugsweise den Austrittsöffnungen des Vordrallerzeugers gegenüberliegend im Bereich des jeweiligen Laufschaufelfußes angeordnet, so dass der dazwischen liegende Spalt zur Vermeidung von Strömungsverlusten möglichst klein gehalten werden kann. In alternativer Ausgestaltung können die Eintrittsöffnungen für das Kühlsystem der jeweiligen Laufschaufel auch außerhalb der eigentlichen Laufschaufel liegend in die Turbinenwelle integriert sein. Dazu kann der Kühlmittelkanal der Laufschaufel aus dieser herausgeführt, oder ein zwischen Eintrittsöffnung und Kühlmittelkanal zwischengeschalteter Verbindungskanal innerhalb der Turbinenwelle vorgesehen sein.

In besonders vorteilhafter Ausgestaltung weist eine Anzahl von Austrittskanälen des Vordrallerzeugers jeweils einen sich in Strömungsrichtung der Kühlluft verengenden eingangsseitigen Teilabschnitt, in dem jeweils die Einspritzdüse für Flüssigkeit angeordnet ist, und einen sich erweiternden ausgangsseitigen Teilabschnitt auf. Die jeweilige Eindüseinheit ist somit als Strahlpumpe konzipiert, wobei der sich verengende Kanalabschnitt der Fangdüse oder dem Mischrohr einer Strahlpumpe und der ausgangsseitige Kanalabschnitt dem Diffusor entspricht. Durch die Strahlpumpenwirkung einer derartigen Anordnung wird eine Druckerhöhung des Mischstroms erreicht, so dass für die nachfolgend zu versorgenden Laufschaufeln unter vergleichsweise hohem Druck stehendes Kühlmittel eingangsseitig zur Verfügung steht.

Die Austrittskanäle des Vordrallerzeugers können als zylindrische oder konisch zulaufende Wanddurchbohrungen, beispielsweise in der Art von Dralldüsen, ausgebildet sein. Bevorzugt werden sie jedoch durch in einem Austrittsschacht angeordnete profilierte Lamellen begrenzt. Dabei ist durch die Wahl einer geeigneten Profilgebung eine im Hinblick auf Temperaturabsenkung und Druckerhöhung des Kühlluftstroms besonders zielgerichtete Beeinflussung relevanter Strömungsparameter ermöglicht.

Als einfach bereitzustellende und handhabbare sowie hinsichtlich ihrer Kühlwirkung geeignete Flüssigkeit ist vorzugsweise Wasser vorgesehen.

Prinzipiell kann der Vordrallerzeuger für eine Übergabe der zwischengekühlten Kühlluft von der jeweiligen Leitschaufelreihe zu einer in Strömungsrichtung des Arbeitsmediums gesehen unmittelbar vorgeordneten oder auch einer nachgeordneten Laufschaufelreihe ausgelegt sein. Auch eine Verzweigung der Kühlluft auf beide benachbarte Laufschaufelreihen ist bei einer dazwischen positionierten Leitschaufelreihe vorstellbar. Im Hinblick auf das in Strömungsrichtung der Gasturbine auftretende Druck- und Temperaturgefälle des Arbeitsmediums und die Tatsache, dass das Kühlvermögen der Kühlluft sowie der herrschende Kühlluftdruck am austrittsseitigen Ende des Vordrallerzeugers trotz der zuvor erfolgten Zwischenkühlung und gegebenenfalls Druckerhöhung in der Regel geringer sind als beim Eintritt in die jeweilige Leitschaufel, ist eine Übergabe der Kühlluft in die arbeitsmediumseitig stromab gelegene Laufschaufelreihe bevorzugt.

Da gerade die thermisch besonders hoch belastete erste Turbinenstufe einer guten Kühlung bedarf, ist der mit dem Eindüsungssystem für Flüssigkeit versehene Vordrallerzeuger vorzugsweise der ersten Leitschaufelreihe zugeordnet.

Bezüglich des Vordrallerzeugers wird die genannte Aufgabe gelöst, indem in einem oder mehreren der Austrittskanäle, die für eine Überströmung von Kühlluft von den Leitschaufeln einer Leitschaufelreihe zu den Laufschaufeln einer benachbarten Laufschaufelreihe vorgesehen sind, jeweils eine Einspritzdüse für Flüssigkeit angeordnet ist. Ein derartiger Vordrallerzeuger kann insbesondere für die Nachrüstung einer bestehenden Gasturbinenanlage vorgesehen sein. Durch die Nachrüstung einer Vorrichtung zur Wassereindüsung können gegebenenfalls höhere Temperaturzustände des Arbeitsmediums und damit ein höherer Wirkungsgrad der Gasturbine realisiert werden.

Bezüglich des Verfahrens wird die genannte Aufgabe gelöst, indem die aus den Austrittskanälen des Vordrallerzeugers jeweils in einen integrierten Kühlmittelkanal einer Laufschaufel überströmende Kühlluft durch Eindüsen einer Flüssigkeit in einen oder mehrere der Austrittskanäle des Vordrallerzeugers zwischengekühlt wird.

Vorteilhafterweise wird bei einem derartigen Kühlkonzept die jeweils eingedüste Wassermenge variabel an den Betriebszustand der Gasturbine angepasst, wobei beispielsweise für Anlauf- und Volllastzustände unterschiedliche Regelvorgaben anwendbar sind. Weiterhin kann eine derartige Regelung in Abhängigkeit von der Position des jeweiligen Vordrallerzeugers entlang des Strömungsweges für das Arbeitsmedium, d. h. je nach betroffener Turbinenstufe, unterschiedlich ausgelegt sein.

Die mit der Erfindung erzielten Vorteile bestehen insbesondere darin, dass durch die Eindüsung einer Flüssigkeit in einen kopfseitig an den Leitschaufeln einer Leitschaufelreihe angeordneten Vordrallerzeuger eine wirkungsvolle Zwischenkühlung von Kühlluft erreicht wird, so dass bei insgesamt gering gehaltenem Kühlluftdurchsatz die auf diese Weise qualitativ aufbereitete Kühlluft für eine zuverlässige Kühlung einer der Leitschaufelreihe kühlluftseitig nachgeschalteten Laufschaufelreihe wiederverwendet werden kann. Dabei beruht die verbesserte Kühlwirkung der aufbereiteten Kühlluft zum einen auf einer durch Verdampfung des eingedüsten Flüssigkeitsnebels verursachten Temperaturabsenkung. Des Weiteren ist die Wärmeaufnahmefähigkeit des entstehenden Kühlluft-Dampf-Gemisches gegenüber einem aus reiner Kühlluft bestehenden Fluid vergrößert, und zwar sowohl durch die günstigeren Stoffwerte des Gemisches als auch durch den vergrößerten Massenstrom.

Die bereitgestellte Kühlvorrichtung bedingt keine Modifikation des bei bestehenden Systemen ohnehin vorgesehenen Strömungsweges, bei dem eine strömungsdynamisch optimierte Übergabe der Kühlluft vom feststehenden Leitschaufelsystem zum rotierenden Laufschaufelsystem durch den am kopfseitigen Ende der Leitschaufeln angeordneten Vordrallerzeuger erfolgt. Durch die Anordnung der Kühlvorrichtung im feststehenden Teilsystem der Gasturbine ist eine einfache Verlegung von Versorgungs- und Regelleitungen ermöglicht. Damit kann der apparative Aufwand vergleichsweise gering gehalten werden.

Bei Gestaltung der Eindüsvorrichtung als Ejektorsystem kann durch die Strahlpumpenwirkung des eingedüsten Flüssigkeitsstrahls eine zusätzliche Druckerhöhung des Kühlmittels realisiert werden. Damit sind insbesondere für ein Ausblasen der Kühlluft aus den Filmkühlbohrungen von offen gekühlten Laufschaufeln geeignete Druckverhältnisse gewährleistet. Durch eine vergleichsweise leicht zu bewerkstelligende Variation der eingedüsten Flüssigkeitsmenge lässt sich das entstehende Kühlmittel hinsichtlich Druck und Temperatur an verschiedene Betriebszustände der Gasturbine mit jeweils unterschiedlichem Kühlungsbedarf anpassen.

Ein Ausführungsbeispiel der Erfindung wird anhand einer Zeichnung näher erläutert. Darin zeigen:
- FIG 1: einen Längsschnitt durch eine Gasturbine,
- FIG 2: einen Ausschnitt aus FIG 1, in dem die Leitschaufeln und die Laufschaufeln der ersten Turbinenstufe dargestellt sind, und
- FIG 3: einen Ausschnitt aus einem um die Mittelachse zentrierten zylindrischen Schnitt durch die Gasturbine nach FIG 1.

Gleiche Teile sind in allen Figuren mit denselben Bezugszeichen versehen.

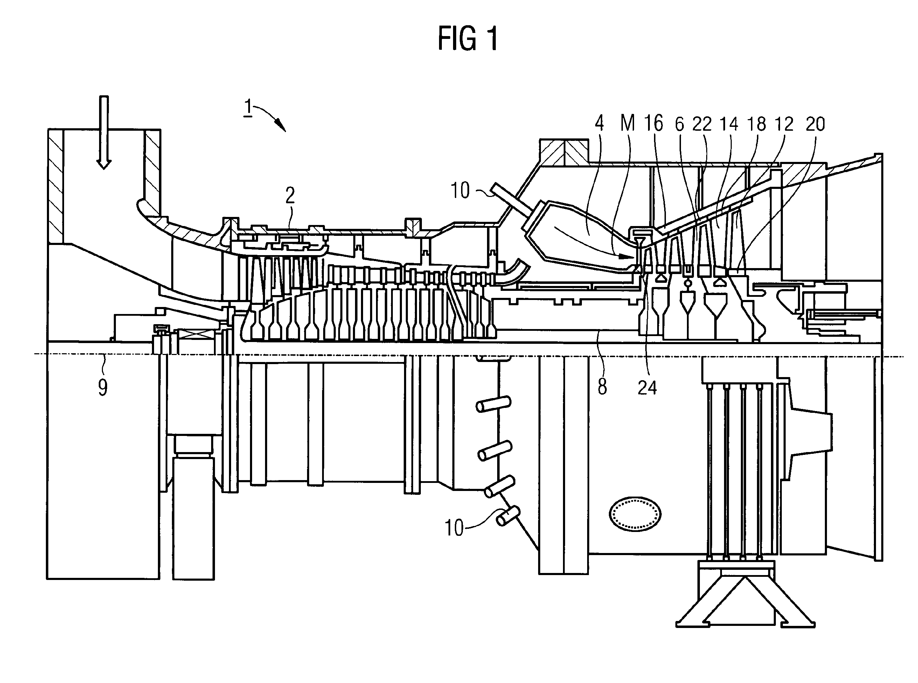

Die Gasturbine 1 gemäß FIG 1 weist einen Verdichter 2 für Verbrennungsluft, eine Brennkammer 4 sowie eine Turbine 6 zum Antrieb des Verdichters 2 und eines nicht dargestellten Generators oder einer Arbeitsmaschine auf. Dazu sind die Turbine 6 und der Verdichter 2 auf einer gemeinsamen, auch als Turbinenläufer bezeichneten Turbinenwelle 8 angeordnet, mit der auch der Generator bzw. die Arbeitsmaschine verbunden ist, und die um ihre Mittelachse 9 drehbar gelagert ist.

Die Brennkammer 4 ist mit einer Anzahl von Brennern 10 zur Verbrennung eines flüssigen oder gasförmigen Brennstoffs bestückt. Sie ist weiterhin an ihrer Innenwand mit nicht näher dargestellten Hitzeschildelementen versehen.

Die Turbine 6 weist eine Anzahl von mit der Turbinenwelle 8 verbundenen, rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfasst die Turbine 6 eine Anzahl von feststehenden Leitschaufeln 14, die ebenfalls kranzförmig unter Bildung von Leitschaufelreihen an einem Innengehäuse 16 der Turbine 6 befestigt sind. Die Laufschaufeln 12 dienen dabei zum Antrieb der Turbinenwelle 8 durch Impulsübertrag vom die Turbine 6 durchströmenden Arbeitsmedium M. Die Leitschaufeln 14 dienen hingegen zur Strömungsführung des Arbeitsmediums M zwischen jeweils zwei in Strömungsrichtung des Arbeitsmediums M gesehen aufeinanderfolgenden Laufschaufelreihen oder Laufschaufelkränzen. Ein aufeinanderfolgendes Paar aus einem Kranz von Leitschaufeln 14 oder einer Leitschaufelreihe und aus einem Kranz von Laufschaufeln 12 oder einer Laufschaufelreihe wird dabei auch als Turbinenstufe bezeichnet.

Jede Leitschaufel 14 weist eine die äußere Begrenzung eines Heißgaskanals für das die Turbine 6 durchströmende Arbeitsmedium M bildende Plattform 18 auf, die zur Fixierung der jeweiligen Leitschaufel 14 am Innengehäuse 16 der Turbine 6 als Wandelement angeordnet ist. Jede Laufschaufel 12 ist in analoger Weise über einen Schaufelfuß 20 an der auch als Rotor oder Turbinenläufer bezeichneten Turbinenwelle 8 befestigt. Den äußeren Enden der Laufschaufeln 12 einer Laufschaufelreihe gegenüberliegend ist jeweils ein Führungsring 22 am Innengehäuse 16 der Turbine 6 angeordnet, der zur Abschirmung des Innengehäuses 16 von dem heißen, die Turbine 6 durchströmenden Arbeitsmedium M dient.

Zur Erzielung eines vergleichsweise hohen Wirkungsgrades ist die Gasturbine 1 für eine vergleichsweise hohe Austrittstemperatur des aus der Brennkammer 4 austretenden Arbeitsmediums M von etwa 1200 °C bis 1300 °C ausgelegt. Um dies zu ermöglichen, sind insbesondere die in besonderem Maße thermisch beanspruchten Laufschaufeln 12 und Leitschaufeln 14 der ersten Turbinenstufe kühlbar ausgeführt, wobei aus dem Verdichtermassenstrom abgezweigte Kühlluft K als Kühlmittel zum Einsatz kommt. Zur Einsparung von Kühlluft K wird die die Leitschaufeln 14 der ersten Leitschaufelreihe verlassende Kühlluft K über einen ringförmig um die Turbinenwelle 8 herum angeordneten, mit den kopfseitigen (freien) Enden der Leitschaufeln 14 verbundenen Vordrallerzeuger 24 zur weiteren Verwendung als Kühlmittel den Laufschaufeln 12 der ersten Laufschaufelreihe zugeführt.

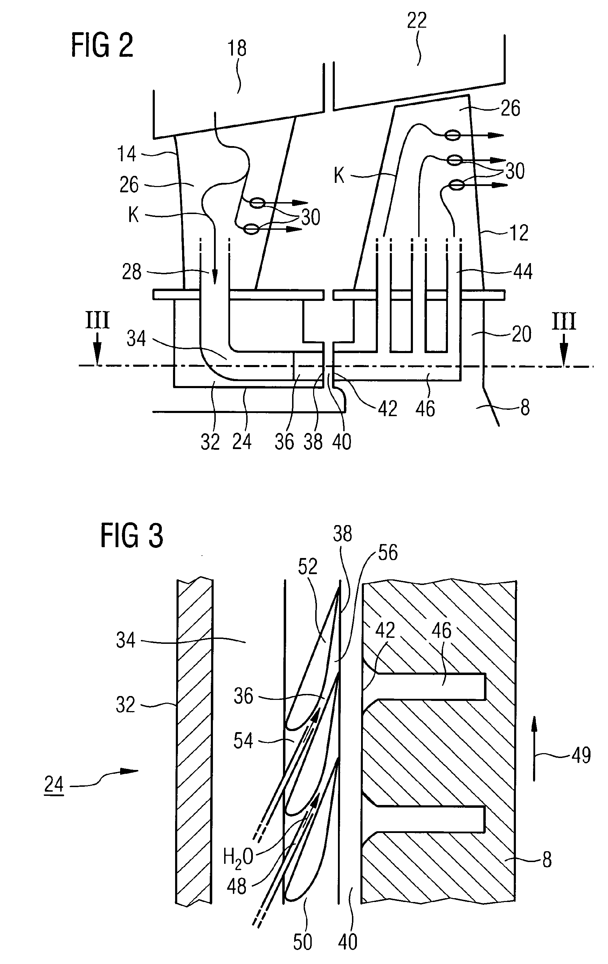

Zur Verdeutlichung des Strömungsweges der Kühlluft K ist der sich an die Brennkammer 4 unmittelbar anschließende Bereich der ersten Turbinenstufe der Gasturbine 1 in FIG 2 im Ausschnitt vergrößert dargestellt. Die in nicht näher dargestellter Weise über die Plattform 18 der jeweiligen Leitschaufel 14 zugeführte Kühlluft K durchströmt den in das Schaufelblatt 26 integrierten, mäanderförmig verlaufenden Kühlluftkanal 28, wobei ein das Schaufelblatt 26 über eine Anzahl von Filmkühllöchern 30 verlassender Teilstrom abgezweigt wird. Der größere Teil des Kühlluftstroms gelangt jedoch über den Kühlluftkanal 28 in den mit dem kopfseitigen Ende der jeweiligen Leitschaufel 14 verbundenen Vordrallerzeuger 24, der für eine Übergabe der strömenden Kühlluft K aus dem feststehenden System der Leitschaufeln 14 in das rotierende System der in Strömungsrichtung des Arbeitsmediums M gesehen unmittelbar nachgeordneten Laufschaufeln 12 ausgelegt ist.

Der Vordrallerzeuger 24 umfasst zwei halbringförmig um die Turbinenwelle 8 herum zentrierte Umlenkungssegmente 32 mit jeweils einem gemeinsamen Verteilerkanal 34 für die aus den Kühlluftkanälen 28 der mit dem jeweiligen Ringsegment in Verbindung stehenden Leitschaufeln 14 austretenden Kühlluft K. Im jeweiligen Verteilerkanal 34 erfolgt ein Druckausgleich, so dass eine hinsichtlich der Strömungsverhältnisse einheitliche Bespeisung der gleichmäßig in Umfangsrichtung des Vordrallerzeugers 24 verteilten Austrittskanäle 36 begünstigt ist. Dabei sind die Austrittskanäle 36 derartig gegen die Mittelachse 9 der Gasturbine 1 geneigt angeordnet, dass die aus den Austrittsöffnungen 38 ausströmende Kühlluft K eine Geschwindigkeitskomponente in Umlaufrichtung der Turbinenwelle 8 erhält. Dadurch ist der möglichst verlustfreie Übertritt in die von den Austrittsöffnungen 38 des Vordrallerzeugers 24 durch einen Spalt 40 beabstandeten und an ihnen sich mit hoher Geschwindigkeit vorbeibewegenden Eintrittsöffnungen 42 in das System der in die Laufschaufeln 12 integrierten Kühlmittelkanäle 44 begünstigt.

Im Ausführungsbeispiel sind die Eintrittsöffnungen 42 in die Turbinenwelle 8 integriert. Über einen vergleichsweise kurzen Eintrittskanal 46 erfolgt die Beaufschlagung der durch Schaufelfuß 20 und Schaufelblatt 26 verlaufenden Kühlmittelkanäle 44 der jeweiligen Laufschaufel 12 mit Kühlluft K. Die Kühlluft K verlässt die jeweilige Laufschaufel 12 am Ende des integrierten Kanalsystems über eine Anzahl von Filmkühllöchern 30 unter Ausbildung eines die Oberfläche des Schaufelblatts 26 vor direktem Kontakt mit dem heißen Arbeitsmedium schützenden Luftfilms.

Das Kühlsystem für die Turbinenschaufeln ist spezifisch für eine Versorgung der Laufschaufeln 12 mit qualitativ "hochwertiger" Kühlluft K bei gleichzeitig möglichst geringem Verbrauch derselben ausgelegt, so dass beim Betrieb der Gasturbine 1 ein besonders hoher Wirkungsgrad erzielbar ist. Zu diesem Zweck ist, wie in FIG 3 gezeigt, in einer Anzahl von Austrittskanälen 36 des Vordrallerzeugers 24 jeweils eine Einspritzdüse 48 für Wasser H₂O angeordnet. Dadurch wird eine besonders effektive Zwischenkühlung der nach dem Durchströmen der Leitschaufeln 14 bereits aufgeheizten Kühlluft K erreicht.

Neben einer Temperaturabsenkung durch Verdampfung des eingedüsten Wassers H₂O und einer erhöhten Wärmekapazität der mit Wasserdampf angereicherten Kühlluft K lässt sich durch die Gestaltung der Eindüsvorrichtung als Ejektorsystem auch noch eine Druckerhöhung erzielen, welche für ein sicheres Abströmen der Kühlluft K aus den Filmkühllöchern 30 (d. h. unter Vermeidung von Rückfluss des unter hohem Druck stehenden heißen Arbeitsmediums M in das System der Kühlmittelkanäle 44) vorteilhaft ist.

Dazu sind die in ihrer Ausrichtung auf die Bewegungsrichtung 49 der Turbinenwelle 8 bzw. der Laufschaufeln 12 abgestimmten Austrittskanäle 36 des Vordrallerzeugers 24 durch in einem Austrittsschacht 50 angeordnete Lamellen 52 voneinander separiert, die derart profiliert sind, dass sie einen den jeweiligen Austrittskanal 36 umgebenden Strahlpumpenkörper mit einem sich in Strömungsrichtung der Kühlluft K verengenden eingangsseitigen Teilabschnitt 54 und einem sich erweiternden ausgangsseitigen Teilabschnitt 56 bilden. Die Einspritzdüse 48 für Wasser H₂O ist jeweils im als Fangdüse wirkenden eingangsseitigen Teilabschnitt 54 angeordnet. Im verengten mittleren Bereich des Austrittskanals 36, der als Mischrohr einer Strahlpumpe angesehen werden kann, erfolgt die Vermischung der beiden Medien und schließlich wird im einen Diffusor bildenden ausgangsseitigen Teilabschnitt 56 die Geschwindigkeit des Mischstromes gesenkt, wobei der Druck ansteigt.

Die Versorgung der Einspritzdüsen 48 mit Wasser H₂O kann bei vergleichsweise geringem Aufwand in hier nicht näher dargestellter Weise über in den feststehenden Leitschaufeln 14 integrierte Versorgungsleitungen erfolgen. Ein ebenfalls nicht näher dargestelltes Regelsystem ermöglicht durch Variation des eingedüsten Flüssigkeitsstroms eine Konditionierung des durch die Kühlluft K bereitgestellten Kühlpotenzials in Bezug auf unterschiedliche Betriebszustände.

## Patentansprüche

1. Gasturbine (1) mit einer Anzahl von jeweils zu Leitschaufelreihen zusammengefassten Leitschaufeln (14) und mit einer Anzahl von jeweils zu Laufschaufelreihen zusammengefassten Laufschaufeln (12), wobei eine Anzahl von Leitschaufeln (14) zumindest einer Leitschaufelreihe jeweils einen oder mehrere integrierte Kühlluftkanäle (28) aufweist, die ausgangsseitig mit einem eine Anzahl von in Austrittsöffnungen (38) mündenden Austrittskanälen (36) aufweisenden Vordrallerzeuger (24) verbunden sind, und wobei die Laufschaufeln (14) einer der jeweiligen Leitschaufelreihe unmittelbar benachbarten Laufschaufelreihe jeweils einen oder mehrere integrierte Kühlmittelkanäle (44) mit einer Anzahl von den Austrittsöffnungen (38) des Vordrallerzeugers (24) kühlmittelseitig nachgeschalteten Eintrittsöffnungen (42) aufweisen,
**dadurch gekennzeichnet, dass**
in einem oder mehreren der Austrittskanäle (36) des Vordrallerzeugers (24) jeweils eine Einspritzdüse (48) für Flüssigkeit angeordnet ist.

2. Gasturbine (1) nach Anspruch 1,
**dadurch gekennzeichnet, dass**
der Vordrallerzeuger (24) eine Anzahl von jeweils mit den kopfseitigen Enden einer Anzahl von Leitschaufeln (14) verbundenen und ringabschnittsförmig um die Turbinenwelle (8) herum angeordneten Umlenkungssegmenten (32) umfasst, die jeweils eingangsseitig über die Kühlluftkanäle (28) der zugeordneten Leitschaufeln (14) mit Kühlluft (K) beaufschlagbar sind.

3. Gasturbine (1) nach Anspruch 2,
**dadurch gekennzeichnet, dass**
einer Anzahl der im jeweiligen Umlenkungssegment (32) angeordneten Austrittskanäle (36) ein gemeinsamer Verteilerkanal (34) kühlluftseitig vorgeschaltet ist.

4. Gasturbine (1) nach einem der Ansprüche 1 bis 3,
**dadurch gekennzeichnet, dass**
die Eintrittsöffnungen (42) für die in die Laufschaufeln (12) integrierten Kühlmittelkanäle (44) den Austrittsöffnungen (38) des Vordrallerzeugers (24) gegenüberliegend im Bereich des Schaufelfußes (20) der jeweiligen Laufschaufel (12) oder in der Turbinenwelle (8) angeordnet sind.

5. Gasturbine (1) nach einem der Ansprüche 1 bis 4,
**dadurch gekennzeichnet, dass**
eine Anzahl von Austrittskanälen (36) des Vordrallerzeugers (24) jeweils einen sich in Strömungsrichtung der Kühlluft (K) verengenden eingangsseitigen Teilabschnitt (54), in dem jeweils die Einspritzdüse (48) für Flüssigkeit angeordnet ist, und einen sich in Strömungsrichtung der Kühlluft (K) erweiternden ausgangsseitigen Teilabschnitt (56) umfasst.

6. Gasturbine (1) nach einem der Ansprüche 1 bis 5,
**dadurch gekennzeichnet, dass**
die Austrittskanäle (36) durch profilierte Lamellen (52) voneinander separiert sind.

7. Gasturbine (1) nach einem der Ansprüche 1 bis 6,
**dadurch gekennzeichnet, dass**
die einzudüsende Flüssigkeit Wasser (H₂O) ist.

8. Gasturbine (1) nach einem der Ansprüche 1 bis 7,
**dadurch gekennzeichnet, dass**
die der jeweiligen Leitschaufelreihe kühlmittelseitig nachgeschaltete Laufschaufelreihe die in Strömungsrichtung des Arbeitsmediums (M) gesehen nachgeordnete Laufschaufelreihe ist.

9. Gasturbine (1) nach einem der Ansprüche 1 bis 8,
**dadurch gekennzeichnet, dass**
der Vordrallerzeuger (24) der ersten Leitschaufelreihe zugeordnet ist.

10. Vordrallerzeuger (24) für eine Gasturbine (1) zur Anordnung am kopfseitigen Ende der eine Leitschaufelreihe bildenden Leitschaufeln (14) mit für eine Überströmung von Kühlluft (K) von den Leitschaufeln (14) der Leitschaufelreihe zu den Laufschaufeln (12) einer benachbarten Laufschaufelreihe vorgesehenen Austrittskanälen (36),
**dadurch gekennzeichnet, dass**
in einem oder mehreren der Austrittskanäle (36) jeweils eine Einspritzdüse (48) für Flüssigkeit angeordnet ist.

11. Verfahren zum Betreiben einer Gasturbine (1) nach einem der Ansprüche 1 bis 9, bei dem die aus den Austrittskanälen (36) des Vordrallerzeugers (24) jeweils in einen integrierten Kühlmittelkanal (44) einer Laufschaufel (12) überströmende Kühlluft (K) durch Eindüsen einer Flüssigkeit in einen oder mehrere der Austrittskanäle (36) des Vordrallerzeugers (24) zwischengekühlt wird.

12. Verfahren nach Anspruch 11, bei dem die jeweils eingedüste Flüssigkeitsmenge variabel an den Betriebszustand der Gasturbine (1) und/oder an die Position der nachfolgend zu kühlenden Laufschaufeln (12) entlang des Strömungsweges für das Arbeitsmedium (M) angepasst wird.
